# EUROPEAN PATENT APPLICATION

(11) **EP 1 356 916 A1**
(43) Date of publication of application: **29.10.2003**
(21) Application number: 03076079.7
(22) Date of filing: 14.04.2003
(51) Int. Cl.: B29C 55/00, G03C 1/795

(54) **Process to make a sheet material with cells and voids**

(30) Priority: 24.04.2002 US 131645
(71) Applicant: EASTMAN KODAK COMPANY, Rochester, New York 14650 (US)
(72) Inventor: Sunderrajan, S., c/o Eastman Kodak Company, P.L.S., Rochester, New York 14650-2201 (US); Dontula, N., c/o Eastman Kodak Company, P.L.S., Rochester, New York 14650-2201 (US); Gula, T.S., c/o Eastman Kodak Company, P.L.S., Rochester, New York 14650-2201 (US); Mruk, W.A., c/o Eastman Kodak Company, P.L.S., Rochester, New York 14650-2201 (US); Dagan, S.J., c/o Eastman Kodak Company, P.L.S., Rochester, New York 14650-2201 (US); Aylward, P.T., c/o Eastman Kodak Company, P.L.S., Rochester, New York 14650-2201 (US); Bomba, R.D., c/o Eastman Kodak Company, P.L.S., Rochester, New York 14650-2201 (US); Heath, T.A., c/o Eastman Kodak Company, P.L.S., Rochester, New York 14650-2201 (US); Colombo, E.A., c/o Eastman Kodak Company, P.L.S., Rochester, New York 14650-2201 (US)
(74) Representative: Haile, Helen Cynthia

(57) **Abstract**

A method of forming a sheet comprising extruding a polymer material comprising an incompatible material and a foaming agent, cooling the extruded material, stretching said extruded material in at least one direction.

## Description

### FIELD OF THE INVENTION

This invention relates to imaging media. More specifically, it relates to a method of manufacture of imaging media. In a preferred form, it relates to the manufacture of supports for photographic, ink jet, thermal, and electrophotographic media.

### BACKGROUND OF THE INVENTION

There are stringent and varied requirements of 'imaging media'. These must typically simultaneously meet requirements of preferred basis weight, caliper, stiffness, smoothness, gloss, whiteness, and opacity in addition to several other image quality, processability, and manufacturability criteria. Supports with properties outside the typical range for 'imaging media' suffer low consumer acceptance.

Such requirements of imaging media demand a constant evolution of material and processing technology. Technologies that permit the reduction in amounts of material used are particularly important for reasons of cost and productivity. One such technology that permits a reduction in materials usage is known in the art as 'polymer foams'. Polymer foams have previously found significant application in food and drink containers, packaging, furniture, appliances, etc. Polymer foams are also referred to as cellular polymers, foamed plastic, , or expanded plastic. Polymer foams are multiple phase systems comprising a solid polymer matrix that is continuous and a gas phase. For example, U.S. Patent 4,832,775 discloses a composite foam/film structure which comprises a polystyrene foam substrate, oriented polypropylene film applied to at least one major surface of the polystyrene foam substrate, and an acrylic adhesive component securing the polypropylene film to said major surface of the polystyrene foam substrate. The foregoing composite foam/film structure can be shaped by conventional processes as thermoforming to provide numerous types of useful articles including cups, bowls, and plates, as well as cartons and containers that exhibit excellent levels of puncture, flex-crack, grease and abrasion resistance, moisture barrier properties, and resiliency.

Foams have also found limited application in imaging media. For example, JP 2839905 B2 discloses a 3-layer structure comprising a foamed polyolefin layer on the image-receiving side, raw paper base, and a polyethylene resin coat on the backside. The foamed resin layer was created by extruding a mixture of 20 weight % titanium dioxide master batch in low density polyethylene, 78 weight % polypropylene, and 2 weight % of Daiblow PE-M20 (AL)NK blowing agent through a T-die. This foamed sheet was then laminated to the paper base using a hot melt adhesive. The disclosure JP 09127648 A highlights a variation of the JP 2839905 B2 structure, in which the resin on the backside of the paper base is foamed, while the image receiving side resin layer is unfoamed. Another variation is a 4-layer structure highlighted in JP 09106038 A. In this, the image receiving resin layer comprises of 2 layers, an unfoamed resin layer which is in contact with the emulsion, and a foamed resin layer which is adhered to the paper base. There are several problems with this, however. Structures described in the foregoing patents need to use foamed layers as thin as 10 µm to 45 µm, since the foamed resin layers are being used to replace existing resin coated layers to the paper base. The thickness restriction is further needed to maintain the structural integrity of the photographic paper base since the raw paper base is providing the stiffness. It is known by those versed in the art of foaming that it is very difficult to make thin uniform foamed films with substantial reduction in density especially in the thickness range noted above.

EP Publication No. 1,211,557 discloses an imaging element comprising an imaging layer and a base wherein said base comprises a closed cell foam core sheet and has adhered thereto an upper and lower flange sheet, and wherein said imaging member has a stiffness of between 50 and 250 millinewtons. The application discloses an imaging element that meets several additional needs of imaging bases, namely, a single in-line manufacturing operation, reduced or completely eliminated raw paperbase, recyclability, and low humidity curl sensitivity. There is a problem with this element however, in that it is difficult to efficiently manufacture large quantities of the imaging element.

Specifically, the preferred manufacturing methods cited in the application include coextrusion of multi-layer foam core and flange sheet structures and mono-layer extrusion of the foam core followed by extrusion lamination of the upper and lower flange sheets. During coextrusion of a multi-layer foam core structure, it is difficult to control the foaming process; particularly it is difficult to control the uniformity of the foam structure, the caliper and caliper uniformity of the foam core, and the surface smoothness of the foam core. In turn, these affect properties of the overall imaging element, particularly stiffness, smoothness, and overall product uniformity. Although this manufacturing operation is feasible and controllable at speeds less than 200 feet per minute and at widths up to 30 inches, it is desirable to run at speeds several times faster and much greater widths with equal or higher efficiencies measured in terms of higher productivity and lower waste.

The mono-layer extrusion of a foam core followed by subsequent extrusion lamination of the upper and lower flange sheets is more efficient and can be run at higher process speeds, however, this operation is more expensive because the upper and lower flange elements need to be manufactured in a separate manufacturing operation prior to the extrusion lamination operation thus making this inherently a two (or more) step manufacturing process. It is desirable to have a single in-line manufacturing operation for lowest cost. It is also desirable to run at high speeds and wide widths with high efficiencies measured in terms of the ratio of first grade product to waste made and higher equipment run-times.

Another manufacturing technique commonly used in the art for a reduction in materials usage is orientation coupled with voiding. It is conceivable that the multi-layer foam core element of EP Publication No. 1,211,557 can be manufactured through a coextrusion followed by a voiding process. In this process, a film is coextruded, quenched, and then oriented and heat set by a flat sheet process or a bubble or tubular process. The flat sheet process involves extruding the resin material through a slit die and rapidly quenching the extruded web upon a chilled casting drum so that the core matrix polymer component of the sheet and the skin components(s) are quenched below their glass solidification temperature. The quenched sheet is then uniaxially oriented by stretching the sheet in a single direction or biaxially oriented by stretching in mutually perpendicular directions at temperatures above the glass transition temperature and below the melting temperature of the matrix polymers. In case of biaxial orientation, the sheet may be stretched in one direction and then in a second direction or may be simultaneously stretched in both directions. After the sheet has been stretched, it is heat set by heating to a temperature sufficient to crystallize or anneal the polymers while restraining to some degree the sheet against retraction in both directions of stretching.

During the orientation process, the sheet film is voided through the use of void-initiating particles present in the matrix polymer. "Void" is used herein to mean devoid of added solid and liquid matter, although the "voids" contain gas. The void-initiating particles which remain in the finished packaging sheet core are typically from 0.1 to 10 µm in diameter, preferably round in shape, so as to produce voids of the desired shape and size. The size of the void is also dependent on the degree of orientation in the machine and transverse directions.

The density (specific gravity) of the composite sheet, expressed in terms of "percent of solid density" is typically between 70% and 100%. As the percent solid density becomes less than 67%, the composite sheet becomes less manufacturable due to a drop in tensile strength. For the imaging element cited in EP Publication No. 1,211,557 comprising an imaging layer and a base wherein said base comprises a closed cell foam core sheet and adhered thereto an upper and lower flange sheet, it is desirable to achieve density reduction of the core layer of 50% or "percent of solid density" of between 30% and 70%. Thus, a manufacturing process comprising coextrusion of a film followed by subsequent orientation and voiding is difficult for the large scale manufacture of the disclosed imaging element.

### PROBLEM TO BE SOLVED BY THE INVENTION

There is a need for an efficient manufacturing process for making multi-layer foam core imaging elements that enable a reduction in materials usage.

There is also a need for this process to be a single in-line manufacturing operation for minimizing cost.

There is also a need for this process to be high speed.

There is also a need for this process to be capable of wide widths.

### SUMMARY OF THE INVENTION

It is an object of the invention to provide an efficient manufacturing process for multi-layer foam core imaging elements.

It is another object of the invention to provide a manufacturing process for multi-layer foam core imaging elements that is capable of wide width manufacture.

It is a further object of the invention to provide a single in-line manufacturing process for multi-layer foam core imaging elements.

These and other objects of the invention are accomplished by a manufacturing process that includes forming a sheet comprising a polymer matrix having cells formed by foaming and voids formed around an incompatible material during stretching of said polymers.

### ADVANTAGEOUS EFFECT OF THE INVENTION

This invention provides a method of forming a multi-layer sheet comprising cells and voids through a combination foaming and voiding process that comprises an efficient single in-line manufacturing operation capable of high speeds and wide widths. In turn, this method results in the creation of a superior imaging support with reduced materials usage. Specifically, it provides an imaging support of high stiffness, excellent smoothness, high opacity, and excellent humidity curl resistance while using substantially less materials than conventional imaging supports. It also provides an imaging support that can be effectively recycled.

### DETAILED DESCRIPTION OF THE INVENTION

The invention has numerous advantages. The invention produces an element that uses less materials while maintaining the desirable features of imaging supports. The invention produces an element that has much less tendency to curl when exposed to extremes in humidity. The element can be manufactured in a single in-line operation. This significantly lowers element manufacturing costs and would eliminate disadvantages in the manufacturing of the current generation of imaging supports including very tight moisture specifications in the raw base and specifications to minimize pits during resin coating. The element can also be recycled to recover and reuse polyolefin instead of being discarded into landfills. It is an objective of this invention to use a sheet of significantly reduced density made through a combination of foaming and orientation/voiding processes at the core of the imaging base, with high modulus flange layers that provide the needed stiffness surrounding the reduced density core on either side. Using this approach, many new features of the imaging base may be exploited and restrictions in manufacturing eliminated. These and other advantages will be apparent from the detailed description below.

Incompatible material herein is defined as a solid material immiscible with the polymer forming the polymer matrix at the temperature of orientation of the matrix. Voiding agent as used herein is defined as an incompatible material present in a polymer sheet that forms voids when the polymer sheet is stretched. Foaming agent as defined herein is a material that forms cells at or prior to the moment of leaving the extrusion dye or shaping equipment. Voided material is defined herein as an oriented polymer material that has voids formed utilizing an incompatible material as a voiding agent. A foamed material is a polymer that has cells formed by a foaming agent prior to or immediately after the polymer containing the foaming agent has pressure released by an extruder or other shaping equipment.

The element of the invention is manufactured through a three-stage process that may, but is not limited to, a single, in-line manufacturing process. The first stage of this process involves the creation of a foamed sheet at a density reduction of between 1% and 30% or, alternatively, percent of solid density of between 99% and 70%. The next stage of this process involves the orientation and voiding of this foamed sheet to further reduce the density of the sheet. After the second stage the density reduction achieved is between 30% and 70% or, alternatively, percent of solid density of between 70% and 30% of the original formulation. The final stage of this process involves the addition of flange layers to the reduced density sheet. This may be done through extrusion coating or through extrusion lamination operations. In addition, surface skin layers for smoothness, primer coats for adhesion, etc. may be used as needed.

The polymer foam core comprises a homopolymer such as a polyolefin, polystyrene, polyester, polyvinylchloride or other typical thermoplastic polymers; their copolymers or their blends thereof; or other polymeric systems like polyurethanes, polyisocyanurates that have been expanded through the use of a blowing agent to consist of two phases, a solid polymer matrix, and a gaseous phase. A second necessary component is an incompatible phase that may be of inorganic (glass, ceramic, mineral, metal salt) or organic (polymeric, fibrous) origin. This second component is important for further density reduction through voiding during the orientation process. Other solid phases may also be present in the foams in the form of fillers that are of organic (polymeric, fibrous) or inorganic (glass, ceramic, metal) origin. The fillers may be used for physical, optical (lightness, whiteness, and opacity), chemical, or processing property enhancements of the foam.

The foaming of these polymers may be carried out through several mechanical, chemical, or physical means. Mechanical methods include whipping a gas into a polymer melt, solution, or suspension, which then hardens either by catalytic action or heat or both, thus entrapping the gas bubbles in the matrix. Chemical methods include such techniques as the thermal decomposition of chemical blowing agents generating gases such as nitrogen or carbon dioxide by the application of heat or through exothermic heat of reaction during polymerization. Physical methods include such techniques as the expansion of a gas dissolved in a polymer mass upon reduction of system pressure; the volatilization of low-boiling liquids such as fluorocarbons or methylene chloride, or the incorporation of hollow microspheres in a polymer matrix. The choice of foaming technique is dictated by desired foam density reduction and desired features. In a preferred embodiment of this invention polyolefins such as polyethylene and polypropylene, their blends and their copolymers are used as the matrix polymer in the foam core along with a chemical blowing agent such as sodium bicarbonate and its mixture with citric acid, organic acid salts, azodicarbonamide, azobisformamide, azobisisobutyrolnitrile, diazoaminobenzene, 4,4'-oxybis(benzene sulfonyl hydrazide) (OBSH), N,N'-dinitrosopentamethyltetramine (DNPA), sodium borohydride, and other blowing agent agents well known in the art. The preferred chemical blowing agents would be sodium bicarbonate/citric acid mixtures, azodicarbonamide; though others can also be used. If necessary, these foaming agents may be used together with an auxiliary foaming agent, nucleating agent, and a cross-linking agent.

Since it is difficult to control the foaming process out of an extruder when simultaneously coupled with density reduction of over 30%, in the process of this invention the density reduction achieved through the foaming process is between 1% and 30%.

It is previously mentioned that a second necessary component is an incompatible phase that may be of inorganic (glass, ceramic, mineral, metal salt) or organic (polymeric, fibrous) origin. This material is a void initiator. The void-initiating particles which remain in the finished packaging sheet core should be from 0.1 to 10 µm in diameter, preferably round in shape, to produce voids of the desired shape and size. The size of the void is also dependent on the degree of orientation in the machine and transverse directions. Ideally, the void would assume a shape which is defined by two opposed and edge contacting concave disks. In other words, the voids tend to have a lens-like or biconvex shape. The voids are oriented so that the two major dimensions are aligned with the machine and transverse directions of the sheet. The Z-direction axis is a minor dimension and is roughly the size of the cross diameter of the voiding particle. The voids generally tend to be closed cells, and thus there is virtually no path open from one side of the voided-core to the other side through which gas or liquid can traverse. During the orientation process, it is also likely that cells that have been formed during the foaming process are further stretched, increasing the density reduction, or alternatively, further reducing percent of solid density.

The void-initiating material may be selected from a variety of materials, and should be present in an amount of 5-70% by weight based on the weight of the core matrix polymer. Preferably, the void-initiating material comprises a polymeric material. When a polymeric material is used, it may be a polymer that can be melt-mixed with the polymer from which the core matrix is made and be able to form dispersed spherical particles as the suspension is cooled down. Examples of this would include nylon dispersed in polypropylene, polybutylene terephthalate in polypropylene, or polypropylene dispersed in polyethylene terephthalate. If the polymer is preshaped and blended into the matrix polymer, the important characteristic is the size and shape of the particles. Spheres are preferred and they can be hollow or solid. These spheres may be made from cross-linked polymers which are members selected from the group consisting of an alkenyl aromatic compound having the general formula Ar-C(R)=CH₂, wherein Ar represents an aromatic hydrocarbon radical, or an aromatic halohydrocarbon radical of the benzene series and R is hydrogen or the methyl radical; acrylate-type monomers include monomers of the formula CH₂=C(R')-C(O)(OR) wherein R is selected from the group consisting of hydrogen and an alkyl radical containing from 1 to 12 carbon atoms and R' is selected from the group consisting of hydrogen and methyl; copolymers of vinyl chloride and vinylidene chloride, acrylonitrile and vinyl chloride, vinyl bromide, vinyl esters having formula CH₂ =CH(O)COR, wherein R is an alkyl radical containing from 2 to 18 carbon atoms; acrylic acid, methacrylic acid, itaconic acid, citraconic acid, maleic acid, fumaric acid, oleic acid, vinylbenzoic acid; the synthetic polyester resins which are prepared by reacting terephthalic acid and dialkyl terephthalics or ester-forming derivatives thereof, with a glycol of the series HO(CH₂)ₙ OH wherein n is a whole number within the range of 2-10 and having reactive olefinic linkages within the polymer molecule, the above described polyesters which include copolymerized therein up to 20 percent by weight of a second acid or ester thereof having reactive olefinic unsaturation and mixtures thereof, and a cross-linking agent selected from the group consisting of divinylbenzene, diethylene glycol dimethacrylate, diallyl fumarate, diallyl phthalate and mixtures thereof.

Examples of typical monomers for making the crosslinked polymer include styrene, butyl acrylate, acrylamide, acrylonitrile, methyl methacrylate, ethylene glycol dimethacrylate, vinyl pyridine, vinyl acetate, methyl acrylate, vinylbenzyl chloride, vinylidene chloride, acrylic acid, divinylbenzene, acrylamidomethylpropane sulfonic acid, vinyl toluene, etc. Preferably, the cross-linked polymer is polystyrene or poly(methyl methacrylate). Most preferably, it is polystyrene and the cross-linking agent is divinylbenzene.

The void-initiating materials may be coated with agents to facilitate voiding. Suitable agents or lubricants include colloidal silica, colloidal alumina, and metal oxides such as tin oxide and aluminum oxide. The preferred agents are colloidal silica and alumina, most preferably, silica. The cross-linked polymer having a coating of an agent may be prepared by procedures well known in the art. For example, conventional suspension polymerization processes wherein the agent is added to the suspension is preferred. As the agent, colloidal silica is preferred.

The void-initiating particles can also be inorganic spheres, including solid or hollow glass spheres, metal or ceramic beads or inorganic particles such as clay, talc, barium sulfate, calcium carbonate. The important thing is that the material does not chemically react with the core matrix polymer to cause one or more of the following problems: (a) alteration of the crystallization kinetics of the matrix polymer, making it difficult to orient, (b) destruction of the core matrix polymer, (c) destruction of the void-initiating particles, (d) adhesion of the void-initiating particles to the matrix polymer, or (e) generation of undesirable reaction products, such as toxic or high color moieties. The void-initiating material should not be photographically active or degrade the performance of the photographic element in which the oriented polyolefin sheet is utilized for the oriented sheet, suitable classes of thermoplastic polymers of the preferred composite sheet comprise polyolefins. Suitable polyolefins include polypropylene, polyethylene, polymethylpentene, polystyrene, polybutylene and mixtures thereof. Polyolefin copolymers, including copolymers of propylene and ethylene with polymers of materials such as hexene, butene, and octene are also useful. Polypropylene and polyethylene are preferred, because they are low in cost and have desirable strength properties. Further, current light sensitive silver halide coatings have been optimized to adhere to polyethylene.

The nonvoided flange layers of the composite sheet can be made of the same polymeric materials as listed above for the voided core matrix. The composite sheet can be made with flange(s) of the same polymeric material as the core matrix, or it can be made with flange(s) of different polymeric composition than the core matrix.

Addenda may be added to the core matrix and/or to the skins to improve the optical properties of the photographic support. Titanium dioxide is preferred and is used in this invention to improve image sharpness or MTF, opacity and whiteness. The TiO₂ used may be either anatase or rutile type. In the case of whiteness, anatase is the preferred type. In the case of sharpness, rutile is the preferred. Further, both anatase and rutile TiO₂ may be blended to improve both whiteness and sharpness. Examples of TiO₂ that are acceptable for a photographic system are Dupont Chemical Co. R101 rutile TiO₂ and DuPont Chemical Co. R104 rutile TiO₂. Other pigments known in the art to improve photographic optical responses may also be used in this invention. Preferred pigments are talc, kaolin, CaCO₃, BaSO₄, ZnO, TiO₂, ZnS, and MgCO₃.

The coextrusion, quenching, orienting, and heat setting of these sheets may be effected by any process which is known in the art for producing oriented sheet, such as by a flat sheet process or a bubble or tubular process. The flat sheet process involves extruding the blend through a slit die and rapidly quenching the extruded web upon a chilled casting drum so that the core matrix polymer component of the sheet is quenched below its glass solidification temperature. The quenched sheet is then uniaxially or biaxially oriented by stretching in one or in mutually perpendicular directions at a temperature above the glass transition temperature and below the melting temperature of the matrix polymers. In case of biaxial orientation, the sheet may be stretched in one direction and then in a second direction or may be simultaneously stretched in both directions. After the sheet has been stretched, it may be heat set by heating to a temperature sufficient to crystallize or anneal the polymers while restraining to some degree the sheet against retraction in both directions of stretching.

The suitable range in caliper of the reduced density core is from 25 µm to 350 µm. The preferred caliper range is between 50 µm and 200 µm because of the preferred overall caliper range of the element which lies between 100 µm and 400 µm. The range in density reduction of the core is from 30% to 70%. The preferred range in density reduction is between 40% and 60% of solid polymer density. This is because it is difficult to manufacture a uniform product with very high density reduction (over 70%). Density reduction is the percent difference between solid polymer and a particular sample. It is also not generally economical to manufacture a product for imaging use with density reduction less than 40% as cost should be as low as possible.

The flange sheets of this invention are chosen to satisfy specific requirements of flexural modulus, caliper, surface roughness, and optical properties such as colorimetry and opacity. The flange members may be formed on the reduced density core by extrusion coating the flange layers or laminating flange sheets to the foam core material. The extrusion coating of flange members onto the reduced density core is preferred for cost. The lamination technique allows a wider range of properties and materials to be used for the flange materials.

In a preferred extrusion coating embodiment of this invention, the flange members are coated onto the preformed reduced density core sheet through an extrusion coating operation in contact with a textured chill-roll or similar technique known by those skilled in the art. The preferred materials comprise high modulus polymers such as high density polyethylene, polypropylene, polyester, or polystyrene; their blends or their copolymers with other polymers such as low density polyethylene, branched polypropylene, etc. which may improve their extrusion coatability, and any desirable additives that improve coatability and features. It may be necessary to use various additives such as antioxidants, slip agents, or lubricants, and light stabilizers. These additives are added to improve, among other things, the dispersibility of fillers and/or colorants, as well as the thermal and color stability during processing and the manufacturability and the longevity of the finished article. For example, the coating may contain antioxidants such as 4,4'-butylidene-bis(6-tert-butyl-meta-cresol), di-lauryl-3,3'-thiopropionate, N-butylated-p-aminophenol, 2,6-di-tert-butyl-p-cresol, 2,2-di-tert-butyl-4-methyl-phenol, N,N-disalicylidene-1,2-diaminopropane, tetra(2,4-tert-butylphenyl)-4,4'-diphenyl diphosphonite, octadecyl 3-(3',5'-di-tert-butyl-4'-hydroxyphenyl propionate), combinations of the above, and the like; heat stabilizers, such as higher aliphatic acid metal salts such as magnesium stearate, calcium stearate, zinc stearate, aluminum stearate, calcium palmitate, zirconium octylate, sodium laurate, and salts of benzoic acid such as sodium benzoate, calcium benzoate, magnesium benzoate and zinc benzoate; light stabilizers such as hindered amine light stabilizers (HALS), of which a preferred example is poly{[6-[(1,1,3,3-tetramethylbutylamino}-1,3,5-triazine-4-piperidinyl)-imino]-1,6-hexanediyl[ {2,2,6,6-tetramethyl-4-piperdinyl)imino] }(Chimassorb 944 LD/FL).

In a preferred lamination embodiment, the element is carried out by bringing together the preformed polymeric flange sheets and the preformed reduced density core with application of an adhesive between them, followed by their being pressed in a nip such as between two rollers. The adhesive may be applied to either the flange sheets or the reduced density core prior to their being brought into the nip. In a preferred form, the adhesive is applied into the nip simultaneously with the flange sheets and the reduced density core. The adhesive may be any suitable material that does not have a harmful effect upon the element. A preferred material is polyethylene that is melted at the time it is placed into the nip between the foam core and the flange sheet. Addenda may also be added to the adhesive layer. Any know material used in the art to improve the optical performance of the system may be used. The use of TiO₂ is preferred. During the lamination process also, it is desirable to maintain control of the tension of the flange sheets in order to minimize curl in the resulting laminated receiver support. of this invention.

The flange sheets used comprise high modulus polymers such as high density polyethylene, polypropylene, polyester, or polystyrene; their blends or their copolymers; that have been stretched and oriented. They may be filled with suitable filler materials as to increase the modulus of the polymer and enhance other properties such as opacity and smoothness. Some of the commonly used inorganic filler materials are talc, clays, calcium carbonate, magnesium carbonate, barium sulfate, mica, aluminum hydroxide (trihydrate), wollastonite, glass fibers and spheres, silica, various silicates, and carbon black. Some of the organic fillers used are wood flour, jute fibers, sisal fibers, polyester fibers, and the like. The preferred fillers are talc, mica, and calcium carbonate because they provide excellent modulus enhancing properties and are relatively inexpensive. Polymer flange sheets useful to this invention are of caliper between 10 µm and 150 µm, preferably between 35 µm and 70 µm.

The composite sheet, while described as having preferably at least three layers; a reduced density core and a flange layer on each side, may also be provided with additional layers that may serve to change the properties of the oriented sheet. Oriented sheets could be formed with surface layers that would provide an improved adhesion between the support and imaging element. The oriented extrusion could be carried out with as many as 10 layers if desired to achieve some particular desired property.

These composite sheets may be coated or treated after the coextrusion and orienting process or between casting and full orientation with any number of coatings which may be used to improve the properties of the sheets including printability, to provide a vapor barrier, to make them heat sealable, or to improve the adhesion to the support or to the photo sensitive layers. Examples of this would be acrylic coatings for printability, coating polyvinylidene chloride for heat seal properties. Further examples include flame, plasma or corona discharge treatment to improve printability or adhesion.

Imaging elements are constrained to a preferred range in stiffness and caliper. At stiffness below a certain minimum stiffness, there may be a problem with the element in print stackability and print conveyance during transport through photofinishing equipment, particularly high speed photoprocessors. It is believed that there is a preferred minimum cross direction stiffness of 60 mN required for effective transport through most photofinishing equipment. At stiffness above a certain maximum, there is a problem with the element in cutting, punching, slitting, and chopping during transport through photofinishing equipment. It is believed that there is a maximum preferred machine direction stiffness of 300 mN for effective transport through most photofinishing equipment. It is also important for the same transport reasons through photofinishing equipment that the caliper of the imaging element be preferably constrained between 75 µm and 350 µm. Imaging elements are typically constrained by consumer performance and present processing machine restrictions to a stiffness range of preferably between approximately 50 mN and 250 mN and a caliper range of preferably between approximately 100 µm and 400 µm to enhance optical properties and reduce cost as needed.

In addition to the stiffness and caliper, an imaging element needs desirable surface smoothness and optical properties such as opacity and colorimetry. Surface smoothness characteristics may be met during flange-sheet manufacturing operations. Alternatively, it may be met by extrusion coating additional layer(s) of polymers such as polyethylene onto the flange sheets in contact with a textured chill-roll or similar technique known by those skilled in the art. Optical properties such as opacity and colorimetry may be met by the appropriate use of filler materials such as titanium dioxide and calcium carbonate and colorants, dyes and/or optical brighteners or other additives known to those skilled in the art. The fillers may be in the flange or an overcoat layer, such as polyethylene. Generally, base materials for color print imaging materials are white, possibly with a blue tint as a slight blue is preferred to form a preferred white look to whites in an image. Any suitable white pigment may be incorporated in the polyolefin layer such as, for example, titanium dioxide, zinc oxide, zinc sulfide, zirconium dioxide, white lead, lead sulfate, lead chloride, lead aluminate, lead phthalate, antimony trioxide, white bismuth, tin oxide, white manganese, white tungsten, and combinations thereof. The pigment is used in any form that is conveniently dispersed within the flange or resin coat layers. The preferred pigment is titanium dioxide. In addition, suitable optical brightener may be employed in the polyolefin layer including those described in *Research Disclosure,* Vol. No. 308, December 1989, Publication 308119, Paragraph V, page 998.

Used herein, the phrase 'imaging element' comprises an imaging support as described above along with an image receiving layer as applicable to multiple techniques governing the transfer of an image onto the imaging element. Such techniques include thermal dye transfer, electrophotographic printing, or ink jet printing, as well as a support for photographic silver halide images. As used herein, the phrase "photographic element" is a material that utilizes photosensitive silver halide in the formation of images.

The thermal dye image-receiving layer of the receiving elements utilizing the invention may comprise, for example, a polycarbonate, a polyurethane, a polyester, polyvinyl chloride, polystyrene-co-acrylonitrile), poly(caprolactone), or mixtures thereof. The dye image-receiving layer may be present in any amount that is effective for the intended purpose. In general, good results have been obtained at a concentration of from 1 to 10 g/m². An overcoat layer may be further coated over the dye-receiving layer, such as described in U.S. Patent No. 4,775,657 of Harrison et al.

Dye-donor elements that are used with the dye-receiving element of the invention conventionally comprise a support having thereon a dye containing layer. Any dye can be used in the dye-donor employed in the invention, provided it is transferable to the dye-receiving layer by the action of heat. Especially good results have been obtained with sublimable dyes. Dye donors applicable for use in the present invention are described, e.g., in U.S. Patent Nos. 4,916,112; 4,927,803; and 5,023,228. As noted above, dye-donor elements are used to form a dye transfer image. Such a process comprises image-wise-heating a dye-donor element and transferring a dye image to a dye-receiving element as described above to form the dye transfer image. In a preferred embodiment of the thermal dye transfer method of printing, a dye donor element is employed which compromises a poly(ethylene terephthalate) support coated with sequential repeating areas of cyan, magenta, and yellow dye, and the dye transfer steps are sequentially performed for each color to obtain a three-color dye transfer image. When the process is only performed for a single color, then a monochrome dye transfer image is obtained.

Thermal printing heads which can be used to transfer dye from dye-donor elements to receiving elements utilizing the invention are available commercially. There can be employed, for example, a Fujitsu Thermal Head (FTP-040 MCS001), a TDK Thermal Head F415 HH7-1089, or a Rohm Thermal Head KE 2008-F3. Alternatively, other known sources of energy for thermal dye transfer may be used, such as lasers as described in, for example, GB No. 2,083,726A.

A thermal dye transfer assemblage utilizing the invention comprises (a) a dye-donor element, and (b) a dye-receiving element as described above, the dye-receiving element being in a superposed relationship with the dye-donor element so that the dye layer of the donor element is in contact with the dye image-receiving layer of the receiving element.

When a three-color image is to be obtained, the above assemblage is formed on three occasions during the time when heat is applied by the thermal printing head. After the first dye is transferred, the elements are peeled apart. A second dye-donor element (or another area of the donor element with a different dye area) is then brought in register with the dye-receiving element and the process repeated. The third color is obtained in the same manner.

The electrographic and electrophotographic processes and their individual steps have been well described in the prior art. The processes incorporate the basic steps of creating an electrostatic image, developing that image with charged, colored particles (toner), optionally transferring the resulting developed image to a secondary substrate, and fixing the image to the substrate. There are numerous variations in these processes and basic steps; the use of liquid toners in place of dry toners is simply one of those variations.

The first basic step, creation of an electrostatic image, can be accomplished by a variety of methods. The electrophotographic process of copiers uses imagewise photodischarge, through analog or digital exposure, of a uniformly charged photoconductor. The photoconductor may be a single-use system, or it may be rechargeable and reimageable, like those based on selenium or organic photoreceptors.

In one form, the electrophotographic process of copiers uses imagewise photodischarge, through analog or digital exposure, of a uniformly charged photoconductor. The photoconductor may be a single-use system, or it may be rechargeable and reimageable, like those based on selenium or organic photoreceptors.

In an alternate electrographic process, electrostatic images are created ionographically. The latent image is created on dielectric (charge-holding) medium, either paper or film. Voltage is applied to selected metal styli or writing nibs from an array of styli spaced across the width of the medium, causing a dielectric breakdown of the air between the selected styli and the medium. Ions are created, which form the latent image on the medium.

Electrostatic images, however generated, are developed with oppositely charged toner particles. For development with liquid toners, the liquid developer is brought into direct contact with the electrostatic image. Usually a flowing liquid is employed to ensure that sufficient toner particles are available for development. The field created by the electrostatic image causes the charged particles, suspended in a nonconductive liquid, to move by electrophoresis. The charge of the latent electrostatic image is thus neutralized by the oppositely charged particles. The theory and physics of electrophoretic development with liquid toners are well described in many books and publications.

If a reimageable photoreceptor or an electrographic master is used, the toned image is transferred to paper (or other substrate). The paper is charged electrostatically, with the polarity chosen to cause the toner particles to transfer to the paper. Finally, the toned image is fixed to the paper. For self-fixing toners, residual liquid is removed from the paper by air-drying or heating. Upon evaporation of the solvent, these toners form a film bonded to the paper. For heat-fusible toners, thermoplastic polymers are used as part of the particle. Heating both removes residual liquid and fixes the toner to paper.

When used as ink jet imaging media, the recording elements or media typically comprise a substrate or a support material having on at least one surface thereof an ink-receiving or image-forming layer. If desired, in order to improve the adhesion of the ink receiving layer to the support, the surface of the support may be corona-discharge-treated prior to applying the solvent-absorbing layer to the support or, alternatively, an undercoating, such as a layer formed from a halogenated phenol or a partially hydrolyzed vinyl chloride-vinyl acetate copolymer, can be applied to the surface of the support. The ink receiving layer is preferably coated onto the support layer from water or water-alcohol solutions at a dry thickness ranging from 3 to 75 µm, preferably 8 to 50 µm.

Any known ink jet receiver layer can be used in combination with the present invention. For example, the ink receiving layer may consist primarily of inorganic oxide particles such as silicas, modified silicas, clays, aluminas, fusible beads such as beads comprised of thermoplastic or thermosetting polymers, non-fusible organic beads, or hydrophilic polymers such as naturally-occurring hydrophilic colloids and gums such as gelatin, albumin, guar, xantham, acacia, chitosan, starches and their derivatives, and the like; derivatives of natural polymers such as functionalized proteins, functionalized gums and starches, and cellulose ethers and their derivatives; and synthetic polymers such as polyvinyloxazoline, polyvinylmethyloxazoline, polyoxides, polyethers, poly(ethylene imine), poly(acrylic acid), poly(methacrylic acid), n-vinyl amides including polyacrylamide and polyvinylpyrrolidone, and poly(vinyl alcohol), its derivatives and copolymers; and combinations of these materials. Hydrophilic polymers, inorganic oxide particles, and organic beads may be present in one or more layers on the substrate and in various combinations within a layer.

A porous structure may be introduced into ink receiving layers comprised of hydrophilic polymers by the addition of ceramic or hard polymeric particulates, by foaming or blowing during coating, or by inducing phase separation in the layer through introduction of non-solvent. In general, it is preferred for the base layer to be hydrophilic, but not porous. This is especially true for photographic quality prints, in which porosity may cause a loss in gloss. In particular, the ink receiving layer may consist of any hydrophilic polymer or combination of polymers with or without additives as is well known in the art.

If desired, the ink receiving layer can be overcoated with an ink-permeable, anti-tack protective layer such as, for example, a layer comprising a cellulose derivative or a cationically-modified cellulose derivative or mixtures thereof. An especially preferred overcoat is poly β-1,4-anhydro-glucose-g-oxyethylene-g-(2'-hydroxypropyl)-N,N-dimethyl-N-dodecylammonium chloride. The overcoat layer is nonporous, but is ink permeable and serves to improve the optical density of the images printed on the element with water-based inks. The overcoat layer can also protect the ink receiving layer from abrasion, smudging, and water damage. In general, this overcoat layer may be present at a dry thickness of 0.1 to 5 µm, preferably 0.25 to 3 µm.

In practice, various additives may be employed in the ink receiving layer and overcoat. These additives include surface active agents such as surfactant(s) to improve coatability and to adjust the surface tension of the dried coating, acid or base to control the pH, antistatic agents, suspending agents, antioxidants, hardening agents to cross-link the coating, antioxidants, UV stabilizers, light stabilizers, and the like. In addition, a mordant may be added in small quantities (2%-10% by weight of the base layer) to improve waterfastness. Useful mordants are disclosed in U.S. Patent No. 5,474,843.

The imaging layers described above, including the ink receiving layer and the overcoat layer, may be coated by conventional coating means onto a transparent or opaque support material commonly used in this art. Coating methods may include, but are not limited to, blade coating, wound wire rod coating, slot coating, slide hopper coating, gravure, curtain coating, and the like. Some of these methods allow for simultaneous coatings of both layers, which is preferred from a manufacturing economic perspective.

The DRL (dye receiving layer) is coated over the tie layer (TL) at a thickness ranging from 0.1 - 10 micrometer, preferably 0.5 - 5 micrometer. There are many known formulations which may be useful as dye receiving layers. The primary requirement is that the DRL is compatible with the inks which it will be imaged so as to yield the desirable color gamut and density. As the ink drops pass through the DRL, the dyes are retained or mordanted in the DRL, while the ink solvents pass freely through the DRL and are rapidly absorbed by the TL. Additionally, the DRL formulation is preferably coated from water, exhibits adequate adhesion to the TL, and allows for easy control of the surface gloss.

For example, Misuda et al in US Patents 4,879,166; 5,264,275; 5,104,730; 4,879,166, and Japanese Patents 1,095,091; 2,276,671; 2,276,670; 4,267,180; 5,024,335; and 5,016,517 disclose aqueous based DRL formulations comprising mixtures of psuedo-bohemite and certain water soluble resins. Light in US Patents 4,903,040; 4,930,041; 5,084,338; 5,126,194; 5,126,195; and 5,147,717 discloses aqueous-based DRL formulations comprising mixtures of vinyl pyrrolidone polymers and certain water-dispersible and/or water-soluble polyesters, along with other polymers and addenda. Butters et al in US Patents 4,857,386 and 5,102,717 disclose ink-absorbent resin layers comprising mixtures of vinyl pyrrolidone polymers and acrylic or methacrylic polymers. Sato et al in US Patent 5,194,317 and Higuma et al in US Patent 5,059,983 disclose aqueous-coatable DRL formulations based on poly(vinyl alcohol). Iqbal in US Patent 5,208,092 discloses water-based IRL formulations comprising vinyl copolymers which are subsequently cross-linked. In addition to these examples, there may be other known or contemplated DRL formulations which are consistent with the aforementioned primary and secondary requirements of the DRL, all of which fall under the spirit and scope of the current invention.

The preferred DRL is 0.1 - 10 µm thick and is coated as an aqueous dispersion of 5 parts alumoxane and 5 parts poly(vinyl pyrrolidone). The DRL may also contain varying levels and sizes of matting agents for the purpose of controlling gloss, friction, and/or fingerprint resistance, surfactants to enhance surface uniformity and to adjust the surface tension of the dried coating, mordanting agents, antioxidants, UV absorbing compounds, light stabilizers, and the like.

Although the ink-receiving elements as described above can be successfully used, it may be desirable to overcoat the DRL for the purpose of enhancing the durability of the imaged element. Such overcoats may be applied to the DRL either before or after the element is imaged. For example, the DRL can be overcoated with an ink-permeable layer through which inks freely pass. Layers of this type are described in US Patents 4,686,118; 5,027,131; and 5,102,717. Alternatively, an overcoat may be added after the element is imaged. Any of the known laminating films and equipment may be used for this purpose. The inks used in the aforementioned imaging process are well known, and the ink formulations are often closely tied to the specific processes, i.e., continuous, piezoelectric, or thermal. Therefore, depending on the specific ink process, the inks may contain widely differing amounts and combinations of solvents, colorants, preservatives, surfactants, humectants, and the like. Inks preferred for use in combination with the image recording elements of the present invention are water-based, such as those currently sold for use in the Hewlett-Packard Desk Writer 560C printer. However, it is intended that alternative embodiments of the image-recording elements as described above, which may be formulated for use with inks which are specific to a given ink-recording process or to a given commercial vendor, fall within the scope of the present invention.

In one preferred embodiment, in order to produce photographic elements, the composite support sheet is coated with a photographic element or elements. The photographic elements can be single color elements or multicolor elements. Multicolor elements contain image dye-forming units sensitive to each of the three primary regions of the spectrum. Each unit can comprise a single emulsion layer or multiple emulsion layers sensitive to a given region of the spectrum. The layers of the element, including the layers of the image-forming units, can be arranged in various orders as known in the art. In an alternative format, the emulsions sensitive to each of the three primary regions of the spectrum can be disposed as a single segmented layer.

The photographic emulsions useful for this invention are generally prepared by precipitating silver halide crystals in a colloidal matrix by methods conventional in the art. The colloid is typically a hydrophilic film forming agent such as gelatin, alginic acid, or derivatives thereof.

The crystals formed in the precipitation step are washed and then chemically and spectrally sensitized by adding spectral sensitizing dyes and chemical sensitizers, and by providing a heating step during which the emulsion temperature is raised, typically from 40° C to 70° C, and maintained for a period of time. The precipitation and spectral and chemical sensitization methods utilized in preparing the emulsions employed in the invention can be those methods known in the art.

Chemical sensitization of the emulsion typically employs sensitizers such as: sulfur-containing compounds, e.g., allyl isothiocyanate, sodium thiosulfate and allyl thiourea; reducing agents, e.g., polyamines and stannous salts; noble metal compounds, e.g., gold, platinum; and polymeric agents, e.g., polyalkylene oxides. As described, heat treatment is employed to complete chemical sensitization. Spectral sensitization is effected with a combination of dyes, which are designed for the wavelength range of interest within the visible or infrared spectrum. It is known to add such dyes both before and after heat treatment.

After spectral sensitization, the emulsion is coated on a support. Various coating techniques include dip coating, air knife coating, curtain coating and extrusion coating.

The silver halide emulsions utilized in this invention may be comprised of any halide distribution. Thus, they may be comprised of silver chloride, silver bromide, silver bromochloride, silver chlorobromide, silver iodochloride, silver iodobromide, silver bromoiodochloride, silver chloroiodobromide, silver iodobromochloride, and silver iodochlorobromide emulsions. It is preferred, however, that the emulsions be predominantly silver chloride emulsions. By predominantly silver chloride, it is meant that the grains of the emulsion are greater than 50 mole percent silver chloride. Preferably, they are greater than 90 mole percent silver chloride; and optimally greater than 95 mole percent silver chloride.

The silver halide emulsions can contain grains of any size and morphology. Thus, the grains may take the form of cubes, octahedrons, cubo-octahedrons, or any of the other naturally occurring morphologies of cubic lattice type silver halide grains. Further, the grains may be irregular such as spherical grains or tabular grains. Grains having a tabular or cubic morphology are preferred.

The photographic elements of the invention may utilize emulsions as described in The Theory of the Photographic Process, Fourth Edition, T. H. James, Macmillan Publishing Company, Inc., 1977, pages 151-152. Reduction sensitization has been known to improve the photographic sensitivity of silver halide emulsions. While reduction sensitized silver halide emulsions generally exhibit good photographic speed, they often suffer from undesirable fog and poor storage stability.

Reduction sensitization can be performed intentionally by adding reduction sensitizers, chemicals which reduce silver ions to form metallic silver atoms, or by providing a reducing environment such as high pH (excess hydroxide ion) and/or low pAg (excess silver ion). During precipitation of a silver halide emulsion, unintentional reduction sensitization can occur when, for example, silver nitrate or alkali solutions are added rapidly or with poor mixing to form emulsion grains. Also, precipitation of silver halide emulsions in the presence of ripeners (grain growth modifiers) such as thioethers, selenoethers, thioureas, or ammonia tends to facilitate reduction sensitization.

Examples of reduction sensitizers and environments which may be used during precipitation or spectral/chemical sensitization to reduction sensitize an emulsion include ascorbic acid derivatives; tin compounds; polyamine compounds; and thiourea dioxide-based compounds described in U.S. Pat. Nos. 2,487,850; 2,512,925; and British Patent 789,823. Specific examples of reduction sensitizers or conditions, such as dimethylamineborane, stannous chloride, hydrazine, high pH (pH 8-11) and low pAg (pAg 1-7) ripening are discussed by S. Collier in Photographic Science and Engineering, 23, 113 (1979). Examples of processes for preparing intentionally reduction sensitized silver halide emulsions are described in EP 0 348 934 Al (Yamashita), EP 0 369 491 (Yamashita), EP 0 371 388 (Ohashi), EP 0 396 424 Al (Takada), EP 0 404 142 Al (Yamada), and EP 0 435 355 Al (Makino).

The photographic elements of this invention may use emulsions doped with Group VII metals such as iridium, rhodium, osmium, and iron as described in Research Disclosure, September 1994, Item 36544, Section I, published by Kenneth Mason Publications, Ltd., Dudley Annex, 12a North Street, Emsworth, Hampshire PO10 7DQ, ENGLAND. Additionally, a general summary of the use of iridium in the sensitization of silver halide emulsions is contained in Carroll, "Iridium Sensitization: A Literature Review," Photographic Science and Engineering, Vol. 24, No. 6, 1980. A method of manufacturing a silver halide emulsion by chemically sensitizing the emulsion in the presence of an iridium salt and a photographic spectral sensitizing dye is described in U.S. Pat. No. 4,693,965. In some cases, when such dopants are incorporated, emulsions show an increased fresh fog and a lower contrast sensitometric curve when processed in the color reversal E-6 process as described in The British Journal of Photography Annual, 1982, pages 201-203.

A typical multicolor photographic element of the invention comprises the invention laminated support bearing a cyan dye image-forming unit comprising at least one red-sensitive silver halide emulsion layer having associated therewith at least one cyan dye-forming coupler; a magenta image-forming unit comprising at least one green-sensitive silver halide emulsion layer having associated therewith at least one magenta dye-forming coupler; and a yellow dye image-forming unit comprising at least one blue-sensitive silver halide emulsion layer having associated therewith at least one yellow dye-forming coupler. The element may contain additional layers, such as filter layers, interlayers, overcoat layers, subbing layers, and the like. The support of the invention may also be utilized for black and white photographic print elements.

The photographic elements may also contain a transparent magnetic recording layer such as a layer containing magnetic particles on the underside of a transparent support, as in U.S. Pat. Nos. 4,279,945 and 4,302,523. Typically, the element will have a total thickness (excluding the support) of from 5 to 30 µm

The invention may be utilized with the materials disclosed in Research Disclosure, September 1997, Item 40145. The invention is particularly suitable for use with the material color paper examples of sections XVI and XVII. The couplers of section II are also particularly suitable. The Magenta I couplers of section II, particularly M-7, M-10, M-18, and M-18, set forth below are particularly desirable.

In the following Table, reference will be made to (1) Research Disclosure, December 1978, Item 17643, (2) Research Disclosure, December 1989, Item 308119, and (3) Research Disclosure, September 1994, Item 36544, all published by Kenneth Mason Publications, Ltd., Dudley Annex, 12a North Street, Emsworth, Hampshire PO10 7DQ, ENGLAND. The Table and the references cited in the Table are to be read as describing particular components suitable for use in the elements of the invention. The Table and its cited references also describe suitable ways of preparing, exposing, processing and manipulating the elements, and the images contained therein.

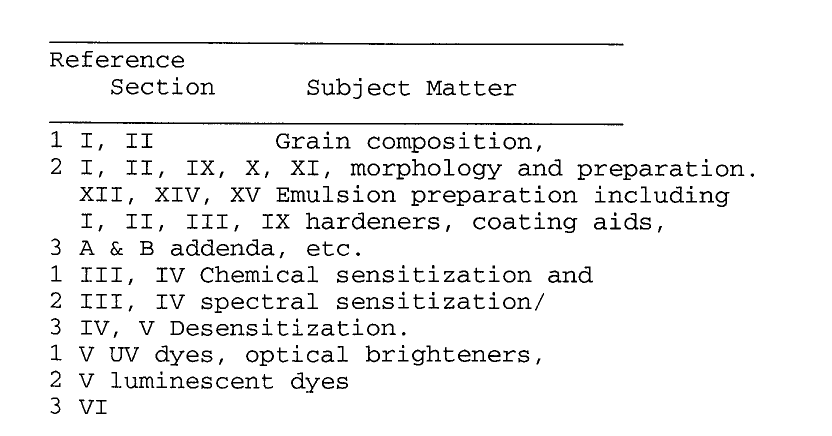

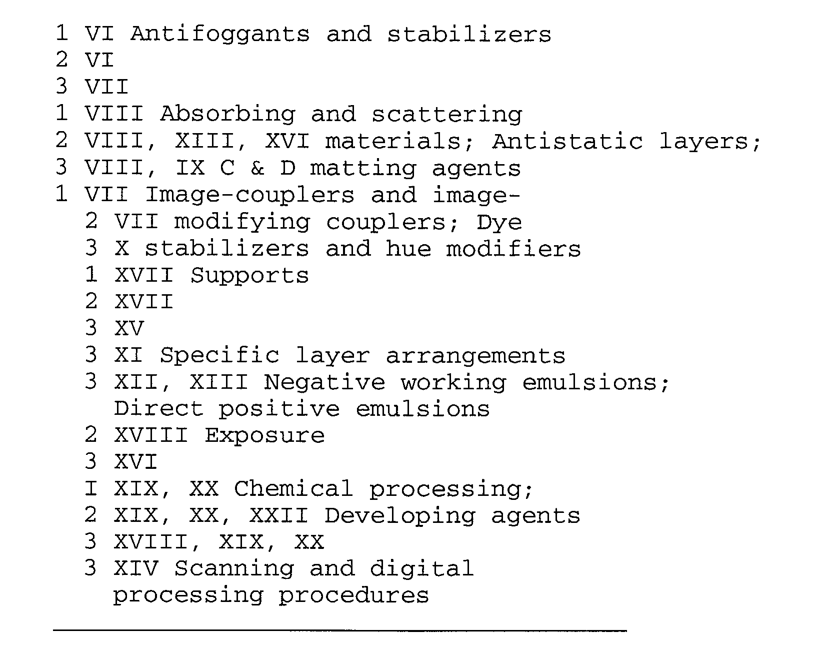

The photographic elements can be exposed with various forms of energy which encompass the ultraviolet, visible, and infrared regions of the electromagnetic spectrum as well as with electron beam, beta radiation, gamma radiation, x-ray, alpha particle, neutron radiation, and other forms of corpuscular and wave-like radiant energy in either noncoherent (random phase) forms or coherent (in phase) forms, as produced by lasers. When the photographic elements are intended to be exposed by x-rays, they can include features found in conventional radiographic elements.

The photographic elements are preferably exposed to actinic radiation, typically in the visible region of the spectrum, to form a latent image, and then processed to form a visible image, preferably by other than heat treatment. Processing is preferably carried out in the known RA-4.TM. (Eastman Kodak Company) Process or other processing systems suitable for developing high chloride emulsions.

This invention is also directed towards a photographic recording element comprising a support and at least one light sensitive silver halide emulsion layer comprising silver halide grains as described above.

The following examples illustrate the practice of this invention. They are not intended to be exhaustive of all possible variations of the invention. Parts and percentages are by weight unless otherwise indicated.

### EXAMPLES

Example 1 is representative of the prior art and is presented here for comparison purposes. It comprises a photographic paper raw base made using a standard fourdrinier paper machine utilizing a blend of mostly bleached hardwood Kraft fibers. The fiber ratio consisted primarily of bleached poplar (38%) and maple/beech (37%) with lesser amounts of birch (18%) and softwood (7%). Acid sizing chemical addenda, utilized on a dry weight basis, included an aluminum stearate size at 0.85% addition, polyaminoamide epichlorhydrin at 0.68% addition, and polyacrylamide resin at 0.24% addition. Titanium dioxide filler was used at 0.60% addition. Surface sizing using hydroxyethylated starch and sodium bicarbonate was also employed. This raw base was then extrusion coated using a face side composite comprising substantially 83% LDPE, 12.5% titanium dioxide, 3% zinc oxide and 0.5% of calcium stearate and a wire side HDPE/LDPE blend at a 46/54 ratio. Resin coverages were approximately 27 g/m².

Example 2 is also a control presented for comparison purposes. It comprises a cast polypropylene sheet that is uniaxially stretched 5 times in the machine direction. The polypropylene used is a Huntsman polypropylene, grade P4G2Z-073A, having a melt index of 1.9. A 1.25" extruder feeding a 7" monolayer coathanger die was used to cast polypropylene onto a three roll stack wherein the roll temperatures were maintained at approximately 150 degrees Fahrenheit. The melt temperature was 391 degrees Fahrenheit, and the throughput was approximately 6.8 kg/hr. The cast sheet thickness was approximately 762 µm. After uniaxial stretching the sheet thickness decreased to approximately 152.4 µm.

Example 3 is also a control presented for comparison purposes. It comprises a foamed cast polypropylene sheet that is subsequently uniaxially stretched 5 times in the machine direction. The polypropylene used is a Huntsman polypropylene, grade P4G2Z-073A, having a melt index of 1.9. The foaming agent used is a chemical blowing agent SAFOAM FPN-30, 20% active ingredients, obtained from Reedy International Corp., at a 0.64% concentration. The processing conditions used were similar to Example 2 above.

Example 4 is also a control presented for comparison purposes. It comprises a voided cast polypropylene sheet that is uniaxially stretched 5 times in the machine direction. The polypropylene used is a Huntsman polypropylene, grade P4G2Z-073A, having a melt index of 1.9. The voiding agent used is polystyrene, grade EA3300, obtained from Chevron-Phillips, at a 30 weight % concentration. The processing conditions used were similar to Example 2 above.

Example 5 of the Invention comprises a reduced density polypropylene sheet that is foamed and then voided. The polypropylene used is a Huntsman polypropylene, grade P4G2Z-073A, having a melt index of 1.9. The foaming agent used is a chemical blowing agent SAFOAM FPN-30, 20% by weight active ingredients, obtained from Reedy International Corp., the blowing agent is added to the polypropylene polymer at a 0.64 weight % concentration. The chemistry of the blowing agent is the reaction of citric acid and bicarbonate of soda in a polystyrene polymer carrier. The voiding agent used is polystyrene, grade EA3300, obtained from Chevron-Phillips, at a 30% concentration of the polypropylene. The processing conditions used were similar to Example 2 above.

Example 6 of the Invention comprises a reduced density polypropylene sheet that is foamed and then voided. The polypropylene used is a Huntsman polypropylene, grade P4G2Z-073A, having a melt index of 1.9. The foaming agent used is a chemical blowing agent SAFOAM FPN-30, 20% by weight active ingredients, obtained from Reedy International Corp., at a 0.64 weight% concentration. The chemistry of the blowing agent is the reaction of citric acid and bicarbonate of soda in a polystyrene polymer carrier. The voiding agent used is polystyrene, grade EA3300, obtained from Chevron-Phillips, at a 30 weight % concentration of the polypropylene. The processing conditions used were similar to Example 2 above except that the sample was simultaneously biaxially stretched 2.5 times each in the machine and cross directions.

Example 7 of the Invention also comprises a reduced density polypropylene sheet that is foamed and then voided. The polypropylene used is a Huntsman polypropylene, grade P4G2Z-073A, having a melt index of 1.9. The foaming agent used is a chemical blowing agent SAFOAM FPN-30, 40% by weight active ingredients, obtained from Reedy International Corp., at a 0.4 weight % concentration. Talc, grade MISTRON ZSC, obtained from Luzenac, is used as an additive at a 2 weight % concentration. The polypropylene melt was extruded through a 12" beadless monolayer coathanger die using a 2.5" extruder on a casting wheel placed in a water bath. The output of the extruder was 27.2 kg/hr, the melt temperature at the extruder exit was 387.5 degrees Farenheit and the casting wheel temperature was 210 degrees Farenheit. The cast sheet was then stretched six times in the machine direction using a machine direction orienter (MDO). The stretched sheet was 222.25 µm thick and of a basis weight 125.14 g/m².

Table 1 describes the basis weight and density reduction for the reduced density sheet for each of examples 2 through 7. In each of examples 5-7, it is seen that density reduction increases in a controlled manner through foaming and subsequent orientation. Density reduction is calculated as the percentage change in density after stretching compared to the virgin polymer blend density before casting, foaming, and voiding.

**TABLE 1**

| Example No. | Cast sheet thickness, micro-meters | Cast sheet density, g/cm³ | Density reduction | Stretch type | Stretch times | Stretched sheet thickness, micro-meters | Stretched sheet density | Density reduction |
|---|---|---|---|---|---|---|---|---|
| 2 | 787 | 0.94 | 0% | Uniax | 5 | 155 | 0.945 | -0.5% |
| 3 | 838 | 0.86 | 8.5% | Uniax | 5 | 289 | 0.61 | 29.1% |
| 4 | 787 | 1 | 0% | Uniax | 5 | 173 | 0.88 | 12.0% |
| 5 | 864 | 0.93 | 7% | Uniax | 5 | 238 | 0.78 | 22% |
| 6 | 864 | 0.93 | 7% | Biax | 5 | 254 | 0.48 | 52% |
| 7 | 883.92 | 0.668 | 24.8% | Uniax | 6 | 222.25 | 0.562 | 36.7% |

Tables 2A, 2B and 2C describe the properties achieved after resin coating a reduced density sheet as described in Examples 8 and 9 of the invention. Also shown for comparison purposes are properties of Example 1, a resin coated photographic support in the prior art.

Opacity was measured according to ASTM method E308-96, specular reflectance was included, and the testing was done by measuring one sheet black by black and then black by white (Baryta).

Stiffness was measured using a Lorentzen and Wetter type tester according to Tappi Method T 556. The bending resistance in milliNewtons of a 20 mm wide vertically clamped sample is measured for a 15° deflection angle.

Surface roughness of the image receiving side of each sample was measured using a Federal Profiler. The Federal Profiler instrument consists of a motorized drive nip which is tangent to the top surface of the base plate. The sample to be measured is placed on the base plate and fed through the nip. A micrometer assembly is suspended above the base plate. The end of the mic spindle provides a reference surface from which the sample thickness can be measured. This flat surface is 0.95 cm diameter and, thus, bridges all fine roughness detail on the upper surface of the sample. Directly below the spindle, and nominally flush with the base plate surface, is a moving hemispherical stylus of the gauge head. This stylus responds to local surface variation as the sample is transported through the gauge. The stylus radius relates to the spatial content that can be sensed. The output of the gauge amplifier is digitized to 12 bits. The sample rate is 500 measurements per 2.5 cm. An imaging paper base with a surface roughness between 0.1 and 0.4 µm has significant commercial value for consumers that prefer glossy images.

Curl was measured using the Kodak Curl Test. This test measures the amount of curl in a parabolically deformed sample. An 8.5 cm diameter round sample of the composite was stored at the test humidity for a minimum of 48 hours. Upon equilibration at the test humidity, the radius of curvature of the curled sample is determined visually by comparing it with standard curves. The curl readings are expressed in ANSI curl units, specifically, 100 divided by the radius of curvature in inches. The standard deviation of the test is 2 curl units. The curl may be positive or negative with the convention followed here that the positive direction is curl towards the photosensitive (image receiving) layer.

Gloss was measured using a Gardner Tri-gloss meter at the 20-degree setting according to the ASTM D523 standard.

Edge penetration resistance was measured using the roller soak test. Samples are conditioned in a 50% R.H. room maintained at 73° F for 24 hours prior to performing this test. An 8.9 cm x 43.1 cm sample is cut into three separate 7.6 cm x 12.7 cm strips. This sample is then laminated at 125 cm/min and 150° C in a sample laminator (Laminex Model 1200). Five slits, each 1.5 cm wide and 11.9 cm long, are cut into each sample. The samples are then weighed and then loaded onto the arm of a RM-501 Robot Roller Machine. The robot arm dips the samples into a solution of RA-4 (T 213) photographic developer in a plastic roller plate. The arm is moved gently back and forth to ensure proper exposure of the sample to the solution, as well as to agitate the developer solution. The substrate sample is exposed to the developer solution for 3 minutes after which the sample is dried and weighed one minute after soak cycle is completed. The sample weight gain provides an indication of the edge penetration resistance with a larger weight gain corresponding to poorer resistance.

## Claims

1. A sheet comprising a matrix polymer having voids containing incompatible material and cells free of incompatible materials.

2. The sheet of claim 1 wherein the said sheet further has a non-oriented polymer layer on each surface.

3. The sheet of claim 1 or 2 wherein the said sheet further comprises an imaging layer.

4. The sheet of any of claims 1-3 wherein the said sheet has a density of between 0.4 g/cm³ and 0.9 g/cm³.

5. The sheet of any of claims 1-4 wherein the said sheet has a matrix volume of between 30 and 70%.

6. A method of forming a sheet comprising extruding a polymer material comprising an incompatible material and a foaming agent, cooling the extruded material, stretching said extruded material in at least one direction.

7. A method of forming a sheet of claim 6 wherein said stretching is in a uniaxial ratio of 3:1 to 7:1.

8. A method of forming a sheet of claim 6 or 7 further comprising applying a polymer to each side of said sheet.

9. A method of forming a sheet of claim 8 wherein the surface coating polymers comprise stiffening agents selected from the group consisting of talc, clays, calcium carbonate, magnesium carbonate, barium sulfate, mica, aluminum hydroxide (trihydrate), wollastonite, glass fibers and spheres, silica, various silicates, carbon black, wood flour, jute fibers, sisal fibers, and polyester fibers.

10. An apparatus for forming sheet material comprising a sheet extruder adapted to deliver a foam sheet to a cooling device, a stretching device for said cooled sheet, and polymer application devices for applying polymer to both sides of said sheet.
